# EUROPÄISCHE PATENTSCHRIFT

(11) **EP 2 581 748 B1**
(45) Veröffentlichungstag und Bekanntmachung des Hinweises auf die Patenterteilung: **06.05.2020**
(21) Anmeldenummer: 12007014.9
(22) Anmeldetag: 10.10.2012
(51) Int. Cl.: G01P 21/00, G01C 21/16, G01C 25/00, G05D 1/10

(54) **Verfahren und Vorrichtung zur Bestimmung von inertialen Messgrößen**
Method and apparatus for the determination of inertial parameters
Procédé et dispositif de détermination de grandeurs de mesure d'inertie

(30) Priorität: 13.10.2011 DE 102011115971
(43) Veröffentlichungstag der Anmeldung: 17.04.2013
(73) Patentinhaber: MBDA Deutschland GmbH, 86529 Schrobenhausen (DE)
(72) Erfinder: Newzella, Alfons, 82239 Alling (DE)
(74) Vertreter: Isarpatent

(56) Entgegenhaltungen:
- EP-A2- 2 124 019
- DE-A1- 19 525 217
- DE-A1-102008 032 046
- DE-U1- 29 508 525
- US-A- 6 047 244

## Beschreibung

### TECHNISCHES GEBIET

Die vorliegende Erfindung betrifft ein Verfahren zur Bestimmung von inertialen Messgrößen mittels einer Inertialsensoren aufweisenden, inertialen Messeinheit nach dem Oberbegriff des Anspruchs 1 sowie eine Vorrichtung zur Bestimmung von inertialen Messgrößen umfassend Mittel zur Durchführung des erfindungsgemäßen Verfahrens, nach dem Oberbegriff des Anspruchs 1. Insbesondere betrifft die Erfindung auch ein Verfahren zur Steuerung eines leichten Flugkörpers mittels einer Inertialsensoren aufweisenden, inertialen Messeinheit sowie eine Steuervorrichtung, umfassend Mittel zur Durchführung dieses Steuerungsverfahrens.

### STAND DER TECHNIK

Leichte Flugkörper, beispielsweise Lenkflugkörper, Lenkgranaten, M3Ds oder "Battlefield Engagement Systems", werden oft mit einem inertialen Navigations- oder Regelsystem (Trägheitsnavigationssystem) ausgestattet. Inertiale Navigationssysteme haben sich aber als fehleranfällig erwiesen. Aus dem Stand der Technik ist es deshalb bekannt, in leichten Flugkörpern zusätzliche Sensoren zu integrieren, deren Signale weitere Informationen zur Lage des Flugkörpers liefern und zur Erkennung von Fehlern beim inertialen Navigationssystem dienen. Diese Signale werden beispielsweise unter Einsatz der Kalman-Filter-Technik benutzt, um die Steuergenauigkeit des Flugkörpers zu verbessern. Zusätzliche Informationen können beispielweise mittels eines GPS, eines Höhenmessers oder eines Magnetometers ermittelt werden.

Aus physikalischen Gründen ist es jedoch teilweise nicht möglich, mit zusätzlichen Sensoren plausible Daten bezüglich der Lage des Flugkörpers zu erfassen. Dies ist beispielsweise dann der Fall, wenn ein am Flugkörper verbauter Sensor von einem nicht oder nur unzureichend signaldurchlässigen Material abgeschirmt ist, und daher die Messungen des Sensors gestört sind. Leichte Flugkörper können daher mit bekannten Navigationssystemen, auch unter Einsatz von zusätzlichen Sensoren manchmal nur unzureichend genau gesteuert werden.

Da die nach dem Stand der Technik standardmäßig eingesetzten Sensoren - und auch die zusätzlich eingesetzten Sensoren - eine hohe Messgenauigkeit und Zuverlässigkeit aufweisen müssen, sind diese oft technisch sehr aufwendig aufgebaut und auch entsprechend groß und schwer. Das zusätzliche Gewicht der Sensoren wirkt sich negativ auf die aerodynamischen Eigenschaften des Flugkörpers aus, und auch die Energiebilanz eines Flugkörpers verschlechtert sich dadurch. Solche zusätzlichen Sensoren beanspruchen außerdem auch viel Bauraum. Deswegen muss im leichten Flugkörper, bei welchem der Bauraum sehr knapp ist, auch oft auf den einen oder anderen Sensor verzichtet werden. Überdies sind die zusätzlichen Sensoren meist sehr teuer. Dies führt wiederum ebenfalls zu hohen Produktionskosten für leichte, automatisch gesteuerte Flugkörper.

Anhand der DE 1 195 25 217 A1 ist es bekannt geworden, mit zwei Inertialsensoren jeweils die gleiche zu erfassende Messgröße in einander zumindest teilweise überdeckenden Messgrößenwertebereichen unabhängig voneinander mit unterschiedlicher Erfassungsgenauigkeit zu erfassen.

Anhand der DE 295 08 525 U1 ist eine Inertialsensor-Einheit bekannt geworden, die eine Vielzahl von Sensoren aufweist, die von der gleichen inertialen Messgröße beaufschlagt werden. Die Sensoren sind dabei auf ein gemeinsames Signalverarbeitungsmittel ausgeschaltet, das ein die inertiale Messgröße wiedergebendes Ausgangssignal bereitstellt. Der Messbereich der inertialen Messgröße ist in mehrere Teilbereiche unterteilt, die von verschiedenen Sensoren erfasst werden.

Anhand der DE 10 2008 032046 A1 ist ein Verfahren zur Kalibrierung eines Positionsbestimmungssystems eines Hinterachslenkungsaktuators für ein Kraftfahrzeug bekannt geworden. Der Aktuator weist ein Aktuatorelement auf, welches durch eine Drehbewegung eines Rotors zu einer translatorischen Bewegung antreibbar ist und dessen geometrische Mittellage mittels einer Referenzmessung bestimmt wird. Das Positionsbestimmungssystem weist einen Linearsensor und einen Drehsensor auf, während der Kalibrierung des Systems wird eine Information erzeugt, die eine Nullpunktsinformation des Linearsensors und eine Sektorinformation umfasst. Der Messbereich des Drehsensors wird in mindestens zwei Sektoren unterteilt und die Sektorinformation identifiziert denjenigen Winkel, in dem die durch den Drehsensor erfasste Winkellage des Rotors liegt, wenn das Aktuatorelement in seiner geometrischen Mittellager angeordnet ist.

Anhand der US 6 047 244 A ist ein Sensorsystem bekannt geworden, welches einen ersten Sensor aufweist zur Erfassung eines Parameters in einem ersten Erfassungsbereich und zur Ausgabe eines ersten, den Parameter darstellenden Sensorsignals. Ein zweiter Sensor erfasst den Parameter in einem zweiten Erfassungsbereich und gibt ein den Parameter darstellendes zweites Sensorsignal aus. Der zweite Erfassungsbereich ist dabei größer als der erste Erfassungsbereich und die beiden Bereiche überlappen einander. Eine Ausgabeeinheit gibt ein Sensorausgangssignal aus, welches auf den beiden Sensorsignalen basiert und stetig differenzierbar ist.

Anhand der EP 2 2124 019 A2 ist eine Inertialmessvorrichtung bekannt geworden mit ersten und zweiten Inertialinstrumenten, die so ausgerichtet sind, dass sie parallele Erfassungsachsen aufweisen, die erste und zweite Ausgabesignale bereitstellen, die ein Maß für die zu messende inertiale Messgröße darstellen.

Ausgehend hiervon liegt der vorliegenden Erfindung die Aufgabe zugrunde, ein Verfahren zur Steuerung eines leichten Flugkörpers zu schaffen, mit welchem der Flugkörper genauer und zuverlässiger gesteuert werden kann als mit bekannten Verfahren. Das erfindungsgemäße Verfahren soll außerdem durchgeführt werden können, ohne dass eine technisch aufwendige Sensorik am Flugkörper verbaut werden muss. Insbesondere soll das Verfahren auch an leichten, automatisch gesteuerten Flugkörpern durchführbar sein, deren Größe und Gewicht gegenüber bekannten, steuerbaren Flugkörpern reduziert ist, und die zudem billiger sind in der Produktion. Schließlich soll auch eine Steuervorrichtung zur Durchführung des erfindungsgemäßen Verfahrens geschaffen werden.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben. Auch schafft die Erfindung eine Steuervorrichtung mit den Merkmalen des Anspruchs 10.

### DARSTELLUNG DER ERFINDUNG

Die Erfindung sieht ein Verfahren zur Bestimmung von inertialen Messgrößen mittels einer Inertialsensoren aufweisenden inertialen Messeinheit vor, wobei mindestens zwei Inertialsensoren jeweils die gleiche zu erfassende Messgröße in einander zumindest teilweise überdeckenden Messbereichen unabhängig voneinander mit unterschiedlicher Erfassungsgenauigkeit erfassen, und aus den erfassten Messgrößenwerten in Abhängigkeit der Erfassungsgenauigkeit wenigstens eines Inertialsensors einen korrigierten Ausgangswert gebildet wird.

Der Ausgangswert kann auch aus nur zwei erfassten Messgrößenwerten gebildet werden, beispielsweise wenn die betreffende Messgröße mit zwei Inertialsensoren erfasst wird, oder er kann auch aus einer Vielzahl von erfassten Messgrößenwerten gebildet werden. Bei der Bildung des Ausgangswerts kann außerdem die Erfassungsgenauigkeit eines einzigen Inertialsensors oder einer Vielzahl von Inertialsensoren mitberücksichtigt werden. Auf diese Weise kann die Genauigkeit und Güte des Verfahrens auf die vorhandene Sensorik abgestimmt werden. Die Bildung des Ausgangswerts kann zudem kontinuierlich oder zu bestimmten, vorgegebenen Zeitpunkten erfolgen.

Da unterschiedliche Inertialsensoren für verschiedene Messbereiche zuverlässigere oder genauere Messgrößenwert liefern, lässt sich mittels des erfindungsgemäßen Verfahrens eine genauere, zuverlässigere Steuerung des Flugkörpers über einen breiteren Bereich an Werten der Messgröße erzielen. Das erfindungsgemäße Verfahren ist damit genauer und zuverlässiger als bekannte Verfahren zur Steuerung eines leichten Flugkörpers. Zudem lässt sich das erfindungsgemäße Verfahren auch an Flugkörpern durchführen, die neben den Inertialsensoren keine zusätzlichen Sensoren aufweisen. Ein Flugkörper kann also mit dem erfindungsgemäßen Verfahren auch dann genau gesteuert werden, wenn keine Daten für zusätzliche Sensoren vorhanden sind. Damit können leichtere und kleinere Flugkörper, die automatisch gesteuert werden sollen, kostengünstiger als bisher gebaut werden.

Der Ausgangswert wird in Abhängigkeit der Messgrößenwerte der Inertialsensoren und deren Offsets gebildet. Bei der Bildung des Ausgangswerts kann ein Offset eines einzelnen oder einer beliebigen Vielzahl an Inertialsensoren berücksichtig werden. Unter einem Offset ist dabei eine Abweichung von mittels eines Sensors erfasstem Messgrößenwert und dem tatsächlichem Wert der Messgröße zu verstehen. Nachfolgend wird unter einem Offset eines Inertialsensors der Betrag des erfassten Messgrößenwerts verstanden, den der Inertialsensor ausgibt, wenn der tatsächliche Wert der Messgröße Null beträgt. Es wird davon ausgegangen, dass der Offset ein näherungsweise systematischer Fehler ist. Wenn ein Inertialsensor also bei einem Messgrößenwert Null einen bestimmten Offset aufweist, kann davon ausgegangen werden, dass er für andere Messgrößenwerte einen ähnlichen Offset aufweist, und somit alle Messgrößenwerte des Inertialsensors näherungsweise um den Offset vom tatsächlichen Wert der Messgröße abweichen.

Gemäß einer bevorzugten Ausführungsform wird der Ausgangswert in Abhängigkeit eines Messgrößenwerts eines ersten Inertialsensors mit höherer Erfassungsgenauigkeit und kleinerem Messbereich und eines zweiten Inertialsensors mit geringerer Erfassungsgenauigkeit und größerem Messbereich gebildet.

Innerhalb des kleineren Messbereichs kann der Messgrößenwert des ersten Inertialsensors bei der Bildung des Ausgangswerts stärker als der Messgrößenwert des zweiten Inertialsensors gewichtet werden. Auf diese Weise wird bei der Bildung des Ausgangswerts für den jeweiligen Messbereich jeweils der genauste Messgrößenwert am stärksten berücksichtigt. Da bei der Bildung zudem auch die Messgrößenwerte eines Inertialsensors mit größerem Messbereich mitberücksichtigt werden, kann ein Ausgangswert für einen großen Wertebereich der Messgröße gebildet werden.

Die bei der Bildung des Ausgangswerts ebenfalls einfließenden Offsets eines ersten und zweiten Inertialsensors werden fortlaufend oder zu vorgegebenen Zeitpunkten ermittelt. Zudem werden eine grundsätzlich bekannte Kalibrierung der Sensoren und eine Ablage der Kalibrierungs-Koeffizienten im Rechner der Messeinheit vorgenommen

Einer der beiden Sensoren pro Achse wird so gewählt, dass er über einen sehr geringen Offset verfügt, der andere hingegen wird bezüglich eines großen Messbereichs und eines stabilen Skalenfaktors ausgewählt. Bei Drehraten oder Beschleunigungen, die in den Messbereich des ersten Sensors fallen, wird unter bestimmten Randbedingungen die Differenz zum Messwert des zweiten Sensors gebildet. Diese Differenz stellt den Offset des zweiten Sensors dar, da der erste als Offset-frei angesehen wird. Dieser während der gesamten Betriebszeit der Sensoreinheit aktualisierte Wert wird zur Korrektur des vom zweiten Sensor ermittelten Messwertes herangezogen, auch wenn der Messwert außerhalb des Messbereichs des ersten Sensors liegt.

Ein Messgrößenwert eines ersten Inertialsensors wird als Ausgangswert ermittelt, wenn er innerhalb des Messbereichs des ersten Inertialsensors liegt, und andernfalls wird der in Abhängigkeit wenigstens eines Offsets eines Inertialsensors korrigierte Messgrößenwert eines zweiten Inertialsensors als Ausgangswert ermittelt. Dabei werden wiederum ein erster Sensor mit höherer Erfassungsgenauigkeit und kleinerem Messbereich und ein zweiter Sensor mit geringerer Erfassungsgenauigkeit und größerem Messbereich eingesetzt.

Da der vom ersten Inertialsensor erfasste Messgrößenwert eine hohe Genauigkeit aufweist, wird dessen Messgrößenwert als Ausgangswert genommen, solange der Messgrößenwert im Messbereich des ersten Inertialsensors liegt.

Liegt der Messgrößenwert außerhalb des Messbereichs des ersten Inertialsensors, muss auf den - weniger genauen - Messgrößenwert des zweiten Inertialsensors zurückgegriffen werden. Um auch hier die Genauigkeit zu steigern, wird dieser aber in Abhängigkeit wenigstens eines Offsets eines Inertialsensors korrigiert. Die Korrektur kann in Abhängigkeit des Offsets des ersten und/oder des zweiten und/oder weiterer Inertialsensoren erfolgen. Auf diese Weise wird über einen großen Wertebereich der Messgröße eine hohe Steuergenauigkeit ermöglicht. Dass der Messgrößenwert des ersten Inertialsensors nicht innerhalb seines Messbereichs liegt, kann beispielsweise daran erkannt werden, dass der erste Inertialsensor keinen, einen außerhalb oder an den Randpunkten des Messbereichs liegenden Messgrößenwert ausgibt, sowie am Ausgabewert des zweiten Sensors.

Der korrigierte Messgrößenwert des zweiten Inertialsensors wird als Ausgangswert gebildet, indem der, wie oben beschrieben gebildete Offset des zweiten Inertialsensors vom Messgrößenwert des zweiten Inertialsensors abgezogen wird.

Unter der Annahme, dass die Offsets der Inertialsensoren sich - wie vorstehend erläutert - systematisch verhalten, kann in Form des korrigierten Messgrößenwerts ein gegenüber dem Messgrößenwert des zweiten Inertialsensors verbesserter, genauerer Messgrößenwert gebildet werden, der auch außerhalb des Messbereichs des ersten Inertialsensors zuverlässig und genau ist.

Vorzugsweise werden im Rahmen des erfindungsgemäßen Verfahrens mit den Inertialsensoren eine Drehrate und/oder eine Beschleunigung erfasst. Eine Drehrate um eine betreffende Messachse wird mit einem Drehratensensor, beispielsweise mit einem Faseroptischen Kreisel oder einem MEMS Kreisel, der klein, leicht und preisgünstig ist, erfasst. Eine Beschleunigung in Richtung einer betreffenden Messachse wird mit einem Beschleunigungssensor, beispielsweise mit einem MEMS-Sensor, einem mikroelektromechanischem Sensor, erfasst.

Gemäß einer bevorzugten Ausführungsform werden die Messgrößenwerte der Inertialsensoren zudem plausibilisiert, und der Ausgangswert wird unabhängig von einem unplausiblen Messgrößenwert gebildet. Auf diese Weise wird vermieden, dass von einem fehlerhaften Inertialsensor ermittelte Messgrößenwerte bei der Bildung des Ausgangswerts mitberücksichtigt werden. Somit werden auch dann zuverlässige Ausgangswerte gebildet, wenn ein Inertialsensor ausfällt oder falsche Werte liefert. Dieses Verfahren ist besonders dann anwendbar, wenn mehr als zwei Sensoren pro Achse Verwendung finden. Insbesondere muss der aktuelle Messwert im Überlappungsbereich von mindestens zwei Sensoren liegen.

Da jede Messgröße mittels wenigstens zweier Inertialsensoren erfasst wird, ist das erfindungsgemäße Verfahren besonders fehlerrobust. Auch wenn ein Inertialsensor ausfällt, wird noch ein sinnvoller Ausgangswert zur Steuerung des Flugkörpers gebildet, solange die Meßgröße im Meßbereich der noch funktionierenden Sensoren liegt. Üblicherweise wird entweder die Nullpunktsgenauigkeit oder der Meßbereich durch den Ausfall eines Sensors eingeschränkt, so ein Ausfall führt jedoch nicht zu einem Totalausfall der Meßeinheit, was z.B. mit einem Verlust der Flugkörpers verbunden wäre

Der Fachmann kennt eine Vielzahl an Möglichkeiten, wie eine Plausibilisierung eines Messgrößenwerts vorgenommen werden kann. Eine der Möglichkeiten besteht beispielsweise darin, einen Zielwertebereich für eine Messgröße zu hinterlegen oder zu ermitteln, und zu erfassen ob ein Messgrößenwert innerhalb des hinterlegten oder ermittelten Zielwertebereichs liegt, wobei außerhalb des Zielwertebereichs liegende Messgrößenwerte als unplausibel eingestuft werden.

Gemäß einer Weiterbildung der Erfindung werden Drehraten um mehrere Messachsen und/oder Beschleunigungen in mehrere Richtungen mittels jeweils mindestens zweier Inertialsensoren unabhängig voneinander erfasst, und für jede der Messachsen wird aus den erfassten Messgrößenwerten ein korrigiertes Ausgangssignal gebildet.

Da das Erfassen von auf unterschiedliche Messachsen bezogener Messgrößen und auch das Bilden eines Ausgangswerts für jede Messachse unabhängig von anderen Messachsen geschieht, kann der Ausfall eines einer bestimmten Messachse zugeordneten Inertialsensors die Güte der Messungen an anderen Messachsen nicht beeinflussen.

Nach dem erfindungsgemäßen Verfahren können Drehraten und Beschleunigungen im Bezug auf eine beliebige Vielzahl von Messachsen erfasst werden. Vorzugsweise wird an drei zueinander senkrecht stehenden Messachsen gemessen, so dass eine vollständige inertiale Lagebestimmung des Flugkörpers möglich ist. Werden sowohl die Drehrate als auch die Beschleunigung für drei senkrecht stehende Messachsen erfasst, werden vorzugsweise wenigstens zwölf Inertialsensoren verwendet, also pro Messachse zwei Drehratensensoren und zwei Beschleunigungssensoren.

Die Erfindung betrifft insbesondere auch ein Verfahren zur Steuerung eines leichten Flugkörpers mittels einer Inertialsensoren aufweisenden inertialen Messeinheit, wobei mindestens zwei Inertialsensoren jeweils die gleiche zu erfassende Messgröße erfassen. Es wird vorgeschlagen, mit den Inertialsensoren die Messgröße in einander zumindest teilweise überdeckenden Messgrößenwertebereichen unabhängig voneinander, mit unterschiedlicher Erfassungsgenauigkeit zu erfassen, und aus den erfassten Messgrößenwerten in Abhängigkeit der Erfassungsgenauigkeit wenigstens eines Inertialsensors einen korrigierten Ausgangswert zu bilden, welcher zur Steuerung des Flugkörpers vorgesehen ist.

Gemäß einer Weiterbildung der Erfindung wird der Ausgangswert zudem in Abhängigkeit wenigstens einer dynamischen Kenngröße des Flugkörpers gebildet. Wenn ein Geschwindigkeitssensor am Flugkörper vorhanden ist, kann bei der Bildung des Ausgangswerts beispielsweise der Messgrößenwert eines Inertialsensors mit größerem Messbereich umso stärker gewichtet werden, je größer die Fluggeschwindigkeit ist, und umgekehrt, das heißt, je geringer die Geschwindigkeit ist, desto stärker wird der Messgrößenwert eines Inertialsensors mit hoher Erfassungsgenauigkeit bei der Bildung des Ausgangswerts gewichtet. Auf diese Weise wird ein an die jeweiligen Genauigkeitsanforderungen angepasster Ausgangswert gebildet.

Eine Gewichtung wird vornehmlich in Abhängigkeit von Größen erfolgen, die bekanntermaßen zu Fehlern im Messsignal führen. Zeigt beispielsweise einer der Drehratensensoren stark beschleunigungsabhängige Fehler, wird man diesen Sensor bei hohen Beschleunigungen nur sehr gering gewichten.

Zur Durchführung des erfindungsgemäßen Steuerungsverfahrens weist ein leichter Flugkörper eine Steuervorrichtung, umfassend Mittel zur Durchführung des Verfahrens, auf.

Zur Durchführung des erfindungsgemäßen allgemeinen Verfahrens zur Bestimmung von inertialen Messgrößen weist eine Vorrichtung zur Bestimmung von inertialen Messgrößen Mittel zur Durchführung des Verfahrens auf.

Es handelt sich bei der Erfindung somit insbesondere um ein Verfahren zur Verbesserung der inertialen Messgenauigkeit bei der Verwendung von kleinen kostengünstigen Sensoren. Eine zur Durchführung eines derartigen Verfahrens ausgestaltete Messeinheit kann beim Bau kleiner leichter und kostengünstiger Flugkörper verwendet werden, daneben aber auch in vielen anderen Einsatzbereichen wie beispielsweise bei der In-house-Navigation, bei der Personen-Navigation oder in leichten Drohnen.

Die Erfindung wird nunmehr im Folgenden anhand der Zeichnung näher erläutert.

### KURZE BESCHREIBUNG DER ZEICHNUNG

Die Zeichnung zeigt in:
- **Fig. 1**: eine funktionale Darstellung der Messbereiche in Abhängigkeit der zu erfassenden Messgröße zweier für die Steuerung eines leichten Flugkörpers nach dem erfindungsgemäßen Verfahren eingesetzter Inertialsensoren;
- **Fig. 2**: eine funktionale Darstellung mittels zweier Inertialsensoren erfasster Messgrößenwerte und durch eine Offsetdifferenz korrigierter Messgrößenwerte in Abhängigkeit der zu erfassenden Messgröße;

- **Fig. 3**: eine funktionale Darstellung der Messbereiche eins MEMS-Sensors mit großem Messbereich und eines hochgenauen Faseroptischen Kreisels mit kleinem, periodischen Messbereich;
- **Fig. 4**: eine schematische Blockbilddarstellung einer ersten Ausführungsform einer Vorrichtung zur Durchführung des erfindungsgemäßen Verfahrens;
- **Fig. 5**: eine schematische Blockbilddarstellung einer Ausführungsform des erfindungsgemäßen Verfahrens zur Erfassung von inertialen Meßgrößen unter Verwendung mehrerer Sensoren pro Achse
- **Fig. 6**: eine schematische Blockbilddarstellung einer zweiten Ausführungsform einer Vorrichtung zur Durchführung des erfindungsgemäßen Verfahrens.

### DARSTELLUNG VON BEVORZUGTEN AUSFÜHRUNGSBEISPIELEN

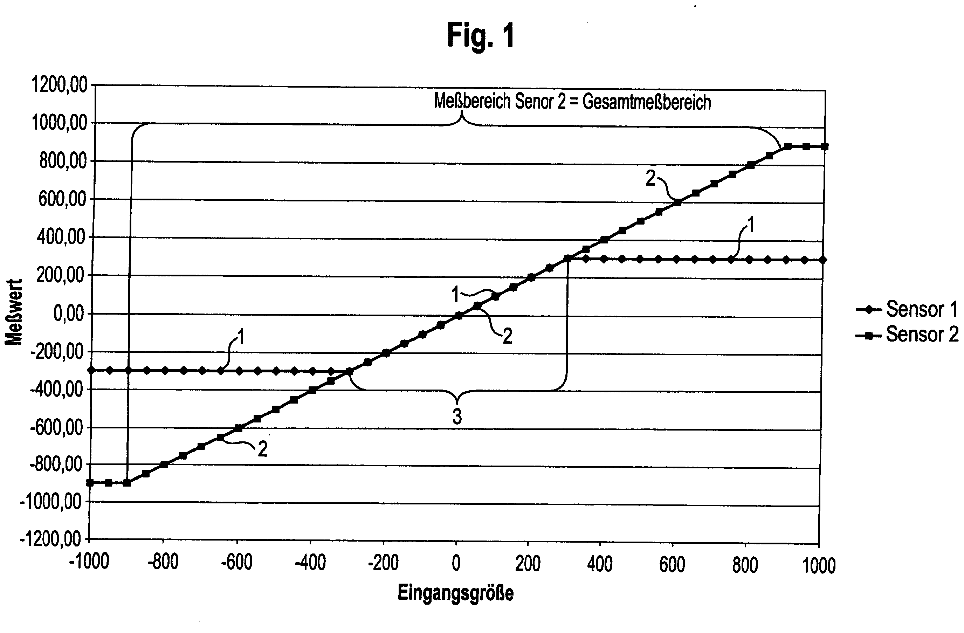

Fig. 1 zeigt eine funktionale Darstellung der Messbereiche in Abhängigkeit der zu erfassenden Messgröße für eine Ausführungsform zweier Inertialsensoren, deren Signale für die Steuerung eines leichten, nicht näher dargestellten Flugkörpers nach dem erfindungsgemäßen Verfahren eingesetzt werden. Dabei weist der erste Inertialsensor eine höhere Erfassungsgenauigkeit, aber einen kleineren Messbereich auf als der zweite Inertialsensor.

Der Messbereich des ersten Inertialsensors ist als Kurve 1 gezeigt. In der dargestellten Einheit der Messgröße liegt der Messbereich 1 ungefähr zwischen -300 und +300. Wenn der tatsächliche Wert der Messgröße außerhalb des Messbereichs 1 liegt, gibt der erste Inertialsensor, wie in der Fig. 1 schematisch dargestellt ist, den unteren, bzw. den oberen Schrankenwert des Messbereichs 1, also ungefähr -300 oder + 300 aus.

Der zweite Inertialsensor hat eine geringere Erfassungsgenauigkeit, dafür aber einen größeren Messbereich. Der Messbereich des zweiten Inertialsensors ist als Kurve 2 dargestellt und liegt ungefähr zwischen -900 und +900. Im überlappenden Messbereich 3, überlappen die Kurven 1 und 2.

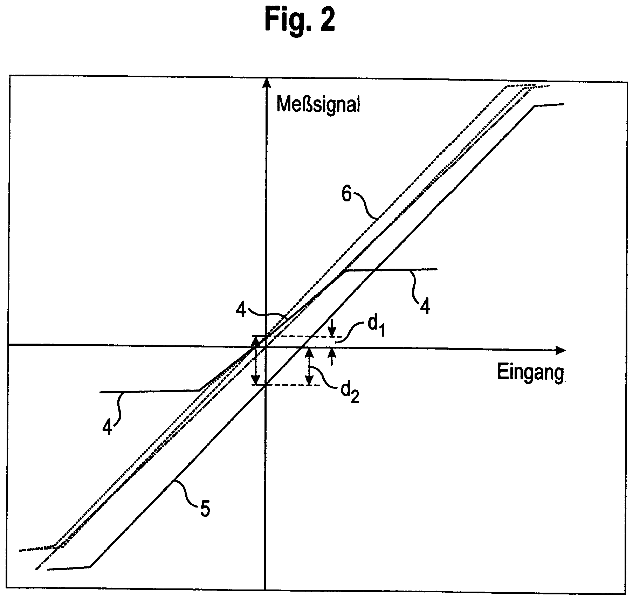

Die tatsächlich von den Inertialsensoren erfassten Messgrößenwerte stimmen aufgrund von Messfehlern nicht exakt mit den tatsächlichen Werten der Messgröße überein. Dies ist in Fig. 2 gezeigt. Die vom ersten Inertialsensor erfassten Messgrößenwerte sind als Kurve 4 dargestellt, die vom zweiten Inertialsensoren erfassten Messgrößenwerte als Kurve 5.

Die Kurve 4 schneidet die Ordinatenachse leicht oberhalb des Nullpunkts des Koordinatensystems. Wenn also der tatsächliche Wert der Messgröße Null beträgt, liefert der erste Inertialsensor einen Wert d₁, der größer ist als Null. Die Differenz zwischen diesem Wert d₁ und Null, also d₁, ist im vorliegenden als der Offset des ersten Inertialsensors definiert. Unter der Annahme, dass dieser Messfehler sich näherungsweise systematisch verhält, kann angenommen werden, dass alle vom ersten Inertialsensor erfassten Messgrößenwerte ungefähr um d₁ vom tatsächlichen Wert abweichen.

Kurve 5 stellt die vom zweiten Inertialsensor erfassten Messgrößenwerte dar. Die Kurve 5 schneidet die Ordinate leicht unterhalb des Koordinatennullpunkts. Bei der dargestellten Ausführungsform mit der zweite Inertialsensor somit einen Messgrößenwert d₂, der kleiner ist als der tatsächliche Wert der Messgröße. Diese Abweichung ist der - bei der dargestellten Ausführungsform des zweiten Inertialsensors negative - Offset d₂ des zweiten Inertialsensors. Der Betrag des zweiten Offsets |d₂| ist größer als der Betrag des ersten Offsets |d₁|; dies widerspiegelt die Tatsache, dass die Erfassungsgenauigkeit des ersten Inertialsensors größer ist als die des zweiten.

Nach der Ausführungsform des erfindungsgemäßen Verfahrens wird innerhalb des Messbereichs des ersten Inertialsensors dessen Messgrößenwert als Ausgangswert für die Steuerung eines leichten Flugkörpers eingesetzt, da dieser, wie soeben erläutert, genauere Messgrößenwerte ausgibt. Um aber auch außerhalb des Messbereichs des ersten Inertialsensors zuverlässige und möglichst genaue Messgrößenwerte zu erhalten, wird als Ausgangswert für die Steuerung des leichten Flugkörpers ein korrigierter Messgrößenwert des zweiten Inertialsensors S₂^{korr} verwendet. Die korrigierten Messgrößenwerte des zweiten Inertialsensors S₂^{korr} sind in der Fig. 2 als Kurve 6 dargestellt.

Die korrigierten Messgrößenwerte S₂^{korr} ergeben sich durch Subtraktion des Offsets des zweiten Inertialsensors d₂ und durch Addition des Offsets des ersten Inertialsensors d₁: S₂^{korr}= S₂-(d₂-d₁) =S₂-D, oder anders ausgedrückt, durch Subtraktion der Offsetdifferenz D zwischen den beiden Offsets: D= d₂-d₁. Dabei sind die beiden Einzel-Offsets d1 und d2 nicht bekannt, sondern lediglich der Differenzoffset D. In der Fig. 2 kann die Kurve 6 der korrigierten Messgrößenwerte S₂^{korr} als gegenüber der Kurve 5 der Messgrößenwerte des zweiten Inertialsensors als um die Offsetdifferenz D parallelverschobene Kurve erkannt werden, deren Schnittpunkt mit der Ordinatenachse mit dem Schnittpunkt der Messgrößenwerte S₁ des ersten Inertialsensors zusammenfällt.

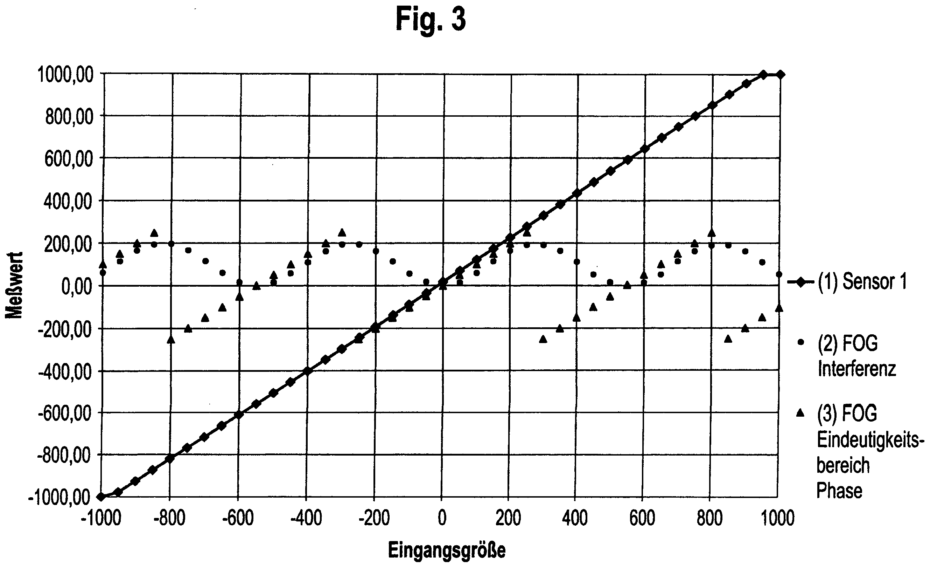

In Fig. 3 sind die Messbereiche eines MEMS-Sensors mit großem und eindeutigem Messbereich und eines hochgenauen Faseroptischen Kreisels mit kleinem, periodischen Messbereich funktional dargestellt. Es ergibt sich die Möglichkeit, die Periodizität im Messbereich des Faseroptischen Kreisels zu nutzen und festzustellen, in welchem Periodizitätsintervall sich der Faseroptische Kreisel gerade befindet.

Ein Faseroptischer Kreisel liefert beim Einschalten nur in einem bestimmten Messbereich - üblicherweise entsprechende einer Sagnac-Phase von ±π - einen eindeutig zuzuordenden Messwert. Größere Drehraten führen zu größeren Phasenverschiebungen welche aber wieder in diese Basisperiode hineinprojiziert werden. Für den Betrieb von Faseroptischen Kreiseln existieren jedoch Verfahren zur Erweiterung des Messbereiches. Diese funktionieren aber nur, wenn der Sensor quasi in Ruhe eingeschaltet wird. Dieses Problem wird durch Verwendung eines zweiten (hier MEMS) Sensors mit sehr großem Messbereich behoben, da man nun aus dem Messwert dieses zweiten Sensors schließen kann, im welchem Periodizitätsintervall der faseroptische Sensor arbeitet.

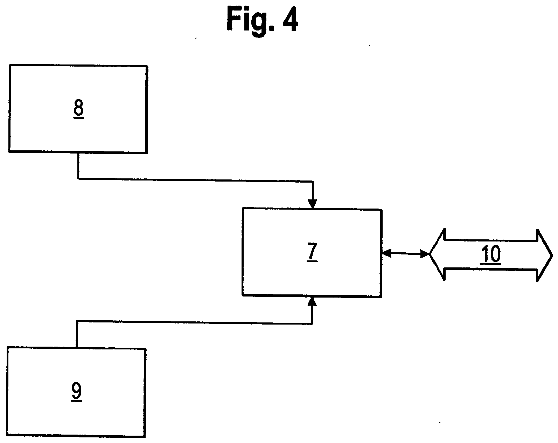

In Fig. 4 ist eine erste Vorrichtung, bestehend aus einer Steuervorrichtung und zwei damit gekoppelten Inertialsensoren zur Durchführung einer Ausführungsform des erfindungsgemäßen Verfahrens als Blockschaltbild schematisch dargestellt.

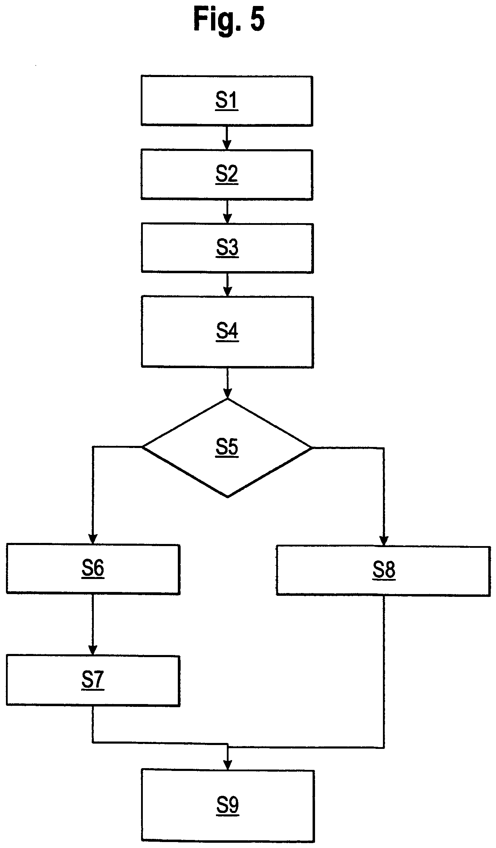

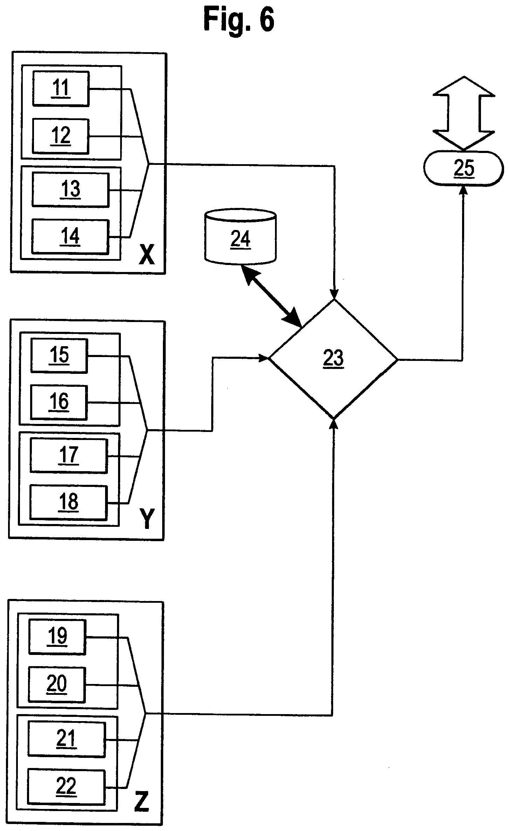

Die erfassten Messgrößenwerte S₁, S₂ eines ersten und eines zweiten Inertialsensors 8, 9 werden an die Steuervorrichtung 7 weitergeleitet. Die Steuervorrichtung verarbeitet diese nach dem erfindungsgemäßen Verfahren, wie nachstehend anhand der Fig. 5 und 6 erläutert werden wird, zu einem Ausgangswert A, der anschließend an ein Stellglied 10 - zum Beispiel eine Lenkeinrichtung - zur Steuerung eines leichten Flugkörpers ausgegeben wird.

Fig. 5 zeigt eine schematische Blockbilddarstellung einer Ausführungsform des erfindungsgemäßen Verfahrens zur Steuerung eines leichten Flugkörpers. Bei dieser Ausführungsform werden zwei Inertialsensoren, ein erster Inertialsensor 8 mit hoher Erfassungsgenauigkeit und kleinerem Messbereich 1, und ein zweiter Inertialsensor 9 mit niedriger Erfassungsgenauigkeit und größerem Messbereich 2 eingesetzt.

Während des Betriebs eines leichten Flugkörpers, zu dessen Steuerung die dargestellte Ausführungsform des Verfahrens eingesetzt wird, wird in einem ersten Schritt S1 eine Messung gestartet. In einem Schritt S2 wird ein Messgrößenwert S₁ des ersten Inertialsensors 8 erfasst, und in einem weiteren Schritt S3 wird ein Messgrößenwert S₂ des zweiten Inertialsensor 9 erfasst. In einem nächsten Schritt S4 werden die Messgrößenwerte S₁, S₂ von einer Steuervorrichtung 7 eingelesen und verarbeitet.

In einem nächsten Verfahrensschritt S5 wird abgefragt, ob der Messgrößenwert S₁ innerhalb des Messbereichs 1 des ersten Inertialsensors 8 liegt. Wenn dies der Fall ist, wird in einem nächsten Schritt S8 der Messgrößenwert S₁ des ersten - genaueren - Inertialsensors 8 als Ausgangswert A ermittelt. Wenn jedoch im Schritt S5 ermittelt wurde, dass der Messgrößenwert S₁ außerhalb des Messbereichs 1 des ersten Inertialsensors 8 liegt, wird zu einem Schritt S6 übergegangen.

Im Schritt S6 wird ein Bias B - ein Maß für die vermutete, systematische Abweichung der Messgrößenwerte von den tatsächlichen Werten - als Offsetdifferenz D=d₂-d₁ ermittelt. Der Bias B ist bei der dargestellten Ausführungsform als Offsetdifferenz, also als Differenz der Offsets d₁, d₂ des ersten und des zweiten Inertialsensors 8, 9 definiert. Bei anderen Ausführungsformen kann der Bias B als jedoch auch aus einem anderen funktionalen Zusammenhang in Abhängigkeit der Offsets d₁, d₂ ermittelt werden: B=f(d₁,d₂). In einem Schritt S7 wird ein korrigierter Messgrößenwert S₂^{korr} des zweiten Sensors 9 ermittelt, indem vom Messgrößenwert S₂ die Offsetdifferenz D subtrahiert wird: S₂^{korr}= S₂-D.

In einem letzten Schritt S9 wird der jeweilige Ausgangswert A, bei der dargestellten Ausführungsform entweder der Messgrößenwert S₁ des ersten Inertialsensors 8 oder der korrigierte Messgrößenwert S₂^{korr} des zweiten Inertialsensors 9 als Ausgangswert A an ein Stellglied 10 des leichten Flugkörpers ausgegeben.

Fig. 6 zeigt eine Blockbilddarstellung einer zweiten Ausführungsform einer Vorrichtung zur Durchführung des erfindungsgemäßen Verfahrens. Bei dieser Ausführungsform werden Drehraten um drei senkrecht stehende Messachsen (x-Achse, y-Achse, z-Achse) und auch Beschleunigungen in Richtung derselben drei Messachsen erfasst.

Hierzu werden pro Messachse vier Inertialsensoren eingesetzt, zwei Drehratensensoren 11, 12 zur Erfassung einer Drehrate um die x-Achse, zwei Beschleunigungssensoren 13, 14 zur Erfassung einer Beschleunigung in Richtung der x-Achse, jeweils zwei Drehratensensoren 15, 16 und zwei Beschleunigungssensoren 17, 18 für die y-Achse, und zwei Drehratensensoren 19, 20 und zwei Beschleunigungssensoren 21, 22 für die z-Achse.

Sämtliche Messgrößenwerte der Inertialsensoren 11 bis 22 werden an eine Steuervorrichtung 23 weitergeleitet, die regelmäßig eine Plausibilisierung der Messgrößenwerte durchführt, unter Einbeziehung von in einer Speichervorrichtung 24 hinterlegten Erfahrungsdaten in Form von Kalibrationskoeffizienten. Die Kalibrationskoeffizienten dienen der Kompensation von modellierbaren, reproduzierbaren Fehlertermen- z.B. über Temperatur, Misalignment oder Kreuzkopplungen. Auch können die mit dem Mehrfachsensorverfahren ermittelten Offsetwerte hier hinterlegt werden, um Langzeitdriften entgegenzuwirken. Der Offset kann mithilfe der Kalibrationskoeffizienten regelmäßig neu eingestellt werden. Auf diese Weise wird ein sogenannter Langzeit-Einschaltdrift vermieden, mit anderen Worten wird also vermieden, dass systematische Messfehler bei langer Laufzeit des Verfahrens unbemerkt immer größer werden. Wenn ein Messgrößenwert unplausibel ist, wird er außerdem bei der Bildung eines Ausgangswerts A nicht mitberücksichtigt. Auf diese Weise kann ein fehlerhafter Inertialsensor aus dem Verfahren zur Steuerung des Flugkörpers ausgeschlossen werden. Die Steuervorrichtung 23 gibt, nachdem sie die Messgrößenwerte nach dem erfindungsgemäßen Verfahren verarbeitet hat, einen Ausgangswert an ein Stellglied 25 des Flugkörpers aus.

Hinsichtlich vorstehend im Einzelnen nicht näher erläuterter Merkmale wird im Übrigen ausdrücklich auf die Ansprüche und die Zeichnung verwiesen.

### Bezugszeichenliste

Es bezeichnen:
- 1: Messbereich eines ersten Inertialsensors
- 2: Messbereich eines zweiten Inertialsensors
- 3: überlappender Bereich der Messbereiche
- 4: vom ersten Inertialsensor erfasste Messgrößenwerte
- 5: vom zweiten Inertialsensor erfasste Messgrößenwerte
- 6: korrigierte Messgrößenwerte des zweiten Inertialsensors
- 7: Steuervorrichtung
- 8: erster Inertialsensor
- 9: zweiter Inertialsensor
- 10: Stellglied eines leichten Flugkörpers
- 11: erster Drehratensensor (x-Achse)
- 12: zweiter Drehratensensor (x-Achse)
- 13: erster Beschleunigungssensor (x-Achse)
- 14: zweiter Beschleunigungssensor (x-Achse)
- 15: erster Drehratensensor (y-Achse)
- 16: zweiter Drehratensensor (y-Achse)
- 17: erster Beschleunigungssensor (y-Achse)
- 18: zweiter Beschleunigungssensor (y-Achse)
- 19: erster Drehratensensor (z-Achse)
- 20: zweiter Drehratensensor (z-Achse)
- 21: erster Beschleunigungssensor (z-Achse)
- 22: zweiter Beschleunigungssensor (z-Achse)
- 23: Steuervorrichtung
- 24: Speichervorrichtung
- 25: Stellglied eines leichten Flugkörpers
- d₁: Offset des ersten Inertialsensors
- d₂: Offset des zweiten Inertialsensors
- S₁: Messgrößenwert des ersten Inertialsensors
- S₂: Messgrößenwert des zweiten Inertialsensors
- S₂^{korr}: korrigierter Messgrößenwert des zweiten Inertialsensors
- A: Ausgangswert

## Patentansprüche

1. Verfahren zur Bestimmung von inertialen Messgrößen mittels einer Inertialsensoren (8, 9) aufweisenden inertialen Messeinheit, wobei mindestens zwei Inertialsensoren (8, 9) jeweils die gleiche zu erfassende Messgröße in einander zumindest teilweise überdeckenden Messbereichen (1, 2) unabhängig voneinander mit unterschiedlicher Erfassungsgenauigkeit erfassen,
**dadurch gekennzeichnet,**
**dass** die inertialen Messgrößen zur Steuerung eines Flugkörpers vorgesehen sind, und aus den erfassten Messgrößenwerten (S₁, S₂) in Abhängigkeit der Erfassungsgenauigkeit wenigstens eines Inertialsensors (8, 9) ein korrigierter Ausgangswert (A) zur Steuerung des Flugkörpers gebildet wird (S7), wobei
- ein Offset (d₁) eines ersten Inertialsensors (8) und ein Offset (d₂) eines zweiten Inertialsensors (9) fortlaufend oder zu vorgegebenen Zeitpunkten ermittelt wird, und
- ein Messgrößenwert (S₁) eines ersten Inertialsensors (8) als Ausgangswert (A) ermittelt wird (S8), wenn er innerhalb des Messbereichs (1) des ersten Inertialsensors (8) liegt, und andernfalls der in Abhängigkeit der Offsets (d₁, d₂) der Inertialsensoren (8, 9) korrigierte Messgrößenwert (S₂^{korr}) des zweiten Inertialsensors (9) als Ausgangssignal (A) ermittelt wird, indem der Offset (d₂) des zweiten Inertialsensors (9) vom Messgrößenwert (S₂) des zweiten Inertialsensors (9) abgezogen, und der Offset (d₁) des ersten Inertialsensors (8) hinzuaddiert wird.

2. Verfahren nach Anspruch 1,
**dadurch gekennzeichnet,**
**dass** der Ausgangswert (A) in Abhängigkeit der Messgrößenwerte (S₁, S₂) der Inertialsensoren (8, 9) und deren Offsets (d₁, d₂) gebildet wird.

3. Verfahren nach Anspruch 1 oder 2,
**dadurch gekennzeichnet,**
**dass** der Ausgangswert (A) in Abhängigkeit eines Messgrößenwerts (S₁) eines ersten Inertialsensors (8) mit höherer Erfassungsgenauigkeit und kleinerem Messbereich (1) und eines Messgrößenwerts (S₂) eines zweiten Inertialsensors (9) mit geringerer Erfassungsgenauigkeit und größerem Messbereich (2) gebildet wird.

4. Verfahren nach einem der vorstehenden Ansprüche,
**dadurch gekennzeichnet,**
**dass** mit den Inertialsensoren (8, 9) eine Drehrate und/oder eine Beschleunigung erfasst wird.

5. Verfahren nach einem der vorstehenden Ansprüche,
**dadurch gekennzeichnet,**
**dass** die Messgrößenwerte (S₁, S₂) der Inertialsensoren (8, 9) plausibilisiert werden, und der Ausgangswert (A) unabhängig von einem unplausiblen Messgrößenwert (S₁, S₂) gebildet wird.

6. Verfahren nach einem der vorstehenden Ansprüche,
**dadurch gekennzeichnet,**
**dass** Drehraten um mehrere Messachsen und/oder Beschleunigungen in Richtung von mehreren Messachsen mittels jeweils mindestens zweier Inertialsensoren (11-22) unabhängig voneinander erfasst werden, und für jede der Messachsen aus den erfassten Messgrößenwerten ein korrigiertes Ausgangssignal (A) gebildet wird.

7. Verfahren nach einem der vorstehenden Ansprüche,
**dadurch gekennzeichnet,**
**dass** das Verfahren zur Steuerung eines Flugkörpers verwendet wird.

8. Verfahren nach einem der vorstehenden Ansprüche,
**dadurch gekennzeichnet,**
**dass** der Ausgangswert (A) in Abhängigkeit wenigstens einer dynamischen Kenngröße des Flugkörpers gebildet wird.

9. Steuervorrichtung (7, 23) zur Steuerung eines Flugkörpers mit Mitteln zur Bildung eines korrigierten Ausgangswerts (A) aus von Inertialsensoren (8, 9) erfassten Messgrößenwerten (S₁, S₂) in Abhängigkeit der Erfassungsgenauigkeit wenigstens eines der Inertialsensoren (8, 9), wobei die Mittel so ausgebildet sind, dass sie das Verfahren nach einem der Ansprüche 1 bis 8 durchführen.

10. Vorrichtung zur Bestimmung von inertialen Messgrößen, welche eine inertiale Messeinheit mit mindestens zwei Inertialsensoren (8, 9) umfasst, die dazu eingerichtet sind, Messgrößen in einander zumindest teilweise überdeckenden Messbereichen unabhängig voneinander mit unterschiedlicher Erfassungsgenauigkeit zu erfassen,
**dadurch gekennzeichnet,**
**dass** die Vorrichtung Mittel zur Bildung eines korrigierten Ausgangswerts (A) aus den erfassten Messgrößenwerten (S₁, S₂) in Abhängigkeit der Erfassungsgenauigkeit wenigstens eines der Inertialsensoren (8, 9) umfasst, wobei die Mittel so ausgebildet sind, dass sie das Verfahren nach einem der Ansprüche 1 bis 8 durchführen.

## Claims

1. Method for the determination of inertial parameters by means of an inertial measurement unit having inertial sensors (8, 9), wherein at least two inertial sensors (8, 9) each independently detect the same parameter with differing detection accuracy in measuring regions (1, 2) at least partially overlapping one another,
**characterised**
**in that** the inertial parameters are provided for steering a missile, and a corrected output value (A) is formed (S7) for steering the missile from the detected measured values (S₁, S₂) as a factor of the detection accuracy of at least one inertial sensor (8, 9), wherein
an offset (d₁) of a first inertial sensor (8) and an offset (d₂) of a second inertial sensor (9) is calculated continuously or at prescribed instants, and
a measured value (S₁) of a first inertial sensor (8) is calculated (S8) as the output value (A) if it is within the measuring region (1) of the first inertial sensor (8), and otherwise the measured value (S₂^{corr}) of the second inertial sensor (9) corrected as a factor of the offset (d₁, d₂) of the inertial sensors (8, 9) is calculated as the output signal (A), wherein the offset (d₂) of the second inertial sensor (9) is subtracted from the measured value (S₂) of the second inertial sensor (9), and the offset (d₁) of the first inertial sensor (8) is added thereto.

2. Method according to claim 1, **characterised in that** the output value (A) is formed as a factor of the measured values (S₁, S₂) of the inertial sensors (8, 9) and their offsets (d₁, d₂).

3. Method according to claim 1 or 2, **characterised in that** the output value (A) is formed as a factor of a measured value (S₁) of a first inertial sensor (8) with higher detection accuracy and a smaller measuring region (1) and a measured value (S₂) of a second inertial sensor (9) with lower detection accuracy and a larger measuring region (2).

4. Method according to any one of the preceding claims, **characterised in that** rotational speed and/or acceleration are detected by means of the inertial sensors (8, 9).

5. Method according to any one of the preceding claims, **characterised in that** the measured values (S₁, S₂) of the inertial sensors (8, 9) are checked for plausibility, and the output value (A) is formed independently of an implausible measured value (S₁, S₂).

6. Method according to any one of the preceding claims, **characterised in that** rotational speeds are detected around a plurality of measuring axes and/or accelerations in the direction of a plurality of measuring axes by means of at least two inertial sensors (11-22) each independently of one another, and for each of the measuring axes a corrected output signal (A) is formed from the detected measured values.

7. Method according to any one of the preceding claims, **characterised in that** the method is used for steering a missile.

8. Method according to any one of the preceding claims, **characterised in that** the output value (A) is provided as a factor of at least one dynamic characteristic value of the missile.

9. Steering device (7, 23) for steering a missile with means to form a corrected output value (A) from measured values (S₁, S₂) detected by inertial sensors (8, 9) as a factor of the detection accuracy of at least one of the inertial sensors (8, 9), wherein the means are provided such that they implement the method according to any one of claims 1 to 8.

10. Apparatus for determining inertial parameters which comprises an inertial measurement unit with at least two inertial sensors (8, 9) equipped to detect parameters independently of one another in at least partially overlapping measuring regions with differing detection accuracy,
**characterised**
**in that** the apparatus comprises means of forming a corrected output value (A) from the detected measured values (S₁, S₂) as a factor of the detection accuracy of at least one of the inertial sensors (8, 9), wherein the means are provided such that they implement the method according to any one of claims 1 to 8.

## Revendications

1. Procédé de détermination de grandeurs de mesure d'inertie au moins d'un capteur inertiel (8, 9) comportant une unité de mesure inertielle, dans lequel au moins deux capteurs inertiels (8, 9) saisissent respectivement la même grandeur de mesure à saisir dans des plages de mesure (1, 2) se chevauchant au moins partiellement, indépendamment l'un de l'autre avec différentes exactitudes de saisie,
**caractérisé en ce que**
les grandeurs de mesure d'inertie sont prévues pour piloter un missile, et une valeur de sortie (A) corrigée est formée (S7) à partir des valeurs de grandeur de mesure saisies (S₁, S₂) en fonction de l'exactitude de saisie d'au moins un capteur inertiel (8, 9) pour piloter le missile, dans lequel
- un décalage (d₁) d'un premier capteur inertiel (8) et un décalage (d₂) d'un deuxième capteur inertiel (9) sont déterminés en continu ou à des instants prédéfinis, et
- une valeur de grandeur de mesure (S₁) d'un premier capteur inertiel (8) est déterminée (S8) comme valeur de sortie (A), lorsqu'elle se trouve à l'intérieur de la plage de mesure (1) du premier capteur inertiel (8), et sinon la valeur de grandeur de mesure du deuxième capteur inertiel (9) corrigée (S₂^{korr}) en fonction du décalage (d₁, d₂) des capteurs inertiels (8, 9) est déterminée comme signal de sortie (A), le décalage (d₂) du deuxième capteur inertiel (9) étant soustrait de la valeur de grandeur de mesure (S₂) du deuxième capteur inertiel (9) et le décalage (d₁) du premier capteur inertiel (9) y étant ajouté.

2. Procédé selon la revendication 1,
**caractérisé en ce**
**que** la valeur de sortie (A) est formée en fonction des valeurs de grandeur de mesure (S₁, S₂) des capteurs inertiels (8, 9) et de leurs décalages (d₁, d₂).

3. Procédé selon la revendication 1 ou 2,
**caractérisé en ce**
**que** la valeur de sortie (A) est formée en fonction d'une valeur de grandeur de mesure (S₁) d'un premier capteur inertiel (8) doté d'une exactitude de saisie plus élevée et d'une plage de mesure plus petite (1) et d'une valeur de grandeur de mesure (S₂) d'un deuxième capteur inertiel (9) doté d'une exactitude de saisie plus faible et d'une plage de mesure plus grande (2).

4. Procédé selon l'une des revendications précédentes, **caractérisé en ce**
**qu'**une vitesse de rotation et/ou une accélération est saisie avec les capteurs inertiels (8, 9).

5. Procédé selon l'une des revendications précédentes, **caractérisé en ce**
**que** la plausibilité des valeurs de grandeur de mesure (S₁, S₂) des capteurs inertiels (8, 9) est établie et la valeur de sortie (A) est formée indépendamment d'une valeur de grandeur de mesure (S₁, S₂) non-plausible.

6. Procédé selon l'une des revendications précédentes, **caractérisé en ce**
**que** des vitesses de rotation autour de plusieurs axes de mesure et/ou des accélérations dans la direction de plusieurs axes de mesure sont saisies respectivement au moyen d'au moins deux capteurs inertiels (11-22) indépendamment l'une de l'autre et un signal de sortie corrigé (A) est formé à partir des valeurs de grandeur de mesure saisies pour chacun des axes de mesure.

7. Procédé selon l'une des revendications précédentes, **caractérisé en ce**
**que** le procédé est utilisé pour piloter un missile.

8. Procédé selon l'une des revendications précédentes, **caractérisé en ce**
**que** la valeur de sortie (A) est formée en fonction d'au moins un paramètre dynamique du missile.

9. Dispositif de pilotage (7, 23) permettant de piloter un missile avec des moyens de former une valeur de sortie corrigée (A) à partir de valeurs de grandeur de mesure (S₁, S₂) saisies par des capteurs inertiels (8, 9) en fonction de l'exactitude de saisie d'au moins un des capteurs inertiels (8, 9), dans lequel les moyens sont réalisés de façon à mettre en œuvre le procédé selon l'une des revendications 1 à 8.

10. Dispositif permettant la détermination de grandeurs de mesure d'inertie, lequel comprend une unité de mesure inertielle dotée d'au moins deux capteurs inertiels (8, 9), lesquels sont disposés de façon à saisir des grandeurs de mesure dans des intervalles de mesure se chevauchant au moins partiellement, indépendamment l'un de l'autre avec différentes exactitudes de saisie,
**caractérisé en ce**
**que** le dispositif comprend des moyens de former une valeur de sortie corrigée (A) à partir des valeurs de grandeur de mesure saisies (S₁, S₂) en fonction de l'exactitude de saisie d'au moins un des capteurs inertiels (8, 9), dans lequel les moyens sont réalisés de façon à mettre en œuvre le procédé selon l'une des revendications 1 à 8.
